# EUROPEAN PATENT SPECIFICATION

(11) **EP 0 339 958 B1**
(45) Date of publication and mention of the grant of the patent: **15.09.1993**
(21) Application number: 89304142.6
(22) Date of filing: 26.04.1989
(51) Int. Cl.: B01D 19/04

(54) **Encapsulated silicone antifoam compositions**
Eingekapselte Silicon-Antischaummittel
Agent antimoussant de silicone capsulé

(30) Priority: 27.04.1988 US 186822
(43) Date of publication of application: 02.11.1989
(73) Proprietor: DOW CORNING CORPORATION, Midland Michigan 48686-0994 (US)
(72) Inventor: Ziemelis, Maris Jazeps, Midland, MI (US); Hameedi, Samia, Summit, NJ (US)
(74) Representative: Lewin, John Harvey

(56) References cited:
- EP-A- 0 040 091
- EP-A- 0 143 603
- DE-B- 2 636 152
- FR-A- 1 313 745
- GB-A- 892 787
- GB-A- 1 154 256
- US-A- 3 898 332

## Description

This invention relates to a dry state non-toxic encapsulated antifoam agent and method for its preparation. More particularly, the invention covers an imbedded silicone antifoam agent encapsulated with a meltable sugar or other biocompatible material. The agents have a wide range of uses including but not limited to foods, drugs, medical, pharmaceuticals, cosmetics, detergents, fermentation and agriculture, for example.

In conventional liquid antifoam applications such as agricultural pesticide formulations containing antifoam agents, it has been found that the liquid antifoam agent in the pesticide formulation is affected by other ingredients in the pesticide formulation to the extent that the effectiveness of the liquid antifoam agent is reduced whereby dispersion by the user of the pesticide in water in order to prepare a tank mix for field use results in the foaming of the mixture. It is believed that the decrease in the effectiveness of the liquid antifoam agent in the pesticide formulation occurs during storage of the pesticide and that it is during the storage stage of the pesticide formulation that the other ingredients of the harsh end use media formulation neutralize the activity of the antifoam agent. Thus, there is a need for an end use formulation containing an antifoam agent or agents that will not deteriorate or become reduced in their activity but will maintain antifoam activity in the formulation over prolonged periods of time in spite of storage or extended shelf life.

Ideally, the antifoam agent should be capable of being added in a dry state and otherwise protected active during the storage stage of the pesticide formulation yet releasable when put into use. Hence, in its protected state, the antifoam agent in the end use formulation should maintain its activity potential under storage conditions, yet be capable of being released when the end use formulation along with the antifoam agent are dispersed in water for use. Thus, a need exists for a solid, dry type antifoam, for use with, for example, herbicide, fungicide and pesticide concentrates. Typically, these products do not contain water in the concentrated form but when diluted with water at the time of their use tend to foam a great deal. Conventional liquid antifoams have not been altogether effective in the prevention of foaming in such harsh environments because the silicone is unable to survive in a highly basic environment for long periods of time. Hence, an ideal solution would be an antifoam material that is in an otherwise dry state and encapsulated and thereby protected from such environments until it is ready to be used.

It has recently been reported that a new process for encapsulating liquids or solids in a cornstarch matrix for slow release has been developed by the USDA Northern Regional Research Center. The matrix consists of a compound produced from amylose and amylopectin. In order to encapsulate a herbicide, for example, cornstarch is cooked in a jet of steam to gelatinize the starch. The herbicide, insect lure, plant growth regulator, fertilizer, medicine, flavoring, coloring or vitamin, is mixed in; dried; and the mixture may be crumbled or ground to granules or particles, respectively. This technique, however, is quite different from the present invention wherein simple sugars with well-defined melting points are employed. Steam or water are not used and the present technique relies upon anhydrous treatment in order to formulate the product. In contrast, the USDA system provides matrices possessing other than well-defined melting points; the matrices are solubilized in water or cooked in a jet of steam; actives are added to aqueous solutions and dried; and the matrices are not actually sugars but rather starch or hydrolyzed by-products of starch. In United Kingdom unexamined application No. 8621846, filed September 10, 1986, and published March 25, 1987, a sugar such as sucrose is used in a detergent composition but acts, rather than an encapsulant, to increase the dispersibility of the detergent. In European unexamined application No. 84109832.0, filed August 17, 1984, published February 19, 1986, particles of sugar such as lactose are embedded in a semi-permeable membrane and then dissolved, releasing water soluble actives. However, the sugar is not an encapsulant; hydrophobic actives are not provided for; and the admixtures include organic solvents as well. Organopolysiloxanes have been covered with non-permeable films in the form of microcapsules in U S-A-4,293,677. However, the films are not sugars and must, in fact, be ruptured.

Such disadvantages of conventional liquid type antifoaming agents are overcome with the present invention, wherein improved dry type encapsulated antifoam agents are provided which are protectable when present in otherwise harsh environments and yet releasable and effective in spite of storage over prolonged periods of time.

The present invention provides an antifoaming composition comprising an inner core of an organopolysiloxane antifoaming composition, and a surrounding outer shell encapsulating the inner core, wherein the outer shell comprises a material selected from a meltable sugar, d-sorbitol, citric acid monohydrate and ascorbic acid.

The invention also provides a method of manufacturing an antifoaming composition as defined above, comprising heating and melting the outer shell material to form a hot melt, adding an organopolysiloxane antifoam compound to the hot melt, dispersing the antifoam compound in the hot melt while maintaining the system in a melted and anhydrous condition, cooling the dispersed melt in order to crystallize the melt, allowing the cooled crystallized melt to solidify whereby the antifoam compound is encapsulated by the solidified outer shell material and treating the solidified composition by reducing it to a small diameter.

This invention relates to organosiloxane antifoam compounds that are protected from otherwise harsh end use media and environments and that can be easily delivered to the media or incorporated therein by means of encapsulating the antifoam agent in the form of a dry solid capsule or in powder form. The encapsulation is conducted using preferably anhydrous alpha-d-glucose as the encapsulating material. Glucose is melted to form a liquid followed by dispersing of the liquid antifoam in the glucose melt as the discontinuous phase. Typically, a silica-filled polydimethylsiloxane antifoam composition is preferred. The melted glucose-antifoam mixture is then crystallized to form solid particles. While the antifoam present within the solid particles is still technically in the liquid state and in the form of minute sized droplets, it is nevertheless considered a dry state for the purposes of this invention since the minute sized antifoam droplets are encased and imbedded within the solid glucose particles.

This invention also relates to organosilicon and fluorosilicon based antifoam compounds that are protected in a dry state from otherwise harsh end use media and environments and that can be easily delivered to the media by means of encapsulating for example a polydimethylsiloxane based antifoam agent in a dry, solid capsule or in powder form. The encapsulation is conducted using preferably anhydrous alpha-d-glucose as the encapsulating material. The anhydrous glucose is melted at about 140°C. to form a liquid initially, followed by dispersing the liquid organosilicon based antifoam agent in the glucose melt as the discontinuous phase. The hot melt of the glucose-antifoam mixture is then poured onto an aluminum foil sheet and allowed to harden. The hardened sheet is ground to particulate size and filtered through a thirty-five mesh screen in order to obtain the encapsulated product.

The invention further relates to an encapsulated antifoam composition of about 80 to 95 weight percent anhydrous alpha-d-glucose and about 5 to 20 weight percent polydimethylsiloxane based antifoam compound, although compositions in the ratio of one to one are contemplated in certain instances. The antifoam compound typically contains amounts of silica and trace amounts of acid.

It is, therefore, an object of the present invention to provide a dry, solid, free flowing, particulate, encapsulated antifoaming composition formed by combining a first portion of a meltable sugar or other biocompatible material together with a second portion of a silicone antifoaming agent.

It is another object of the present invention to provide an antifoaming composition having an inner core of a silicone antifoaming agent and a surrounding outer shell encapsulated to the inner core, of a meltable sugar or other biocompatible material.

It is a further object of the present invention to provide an active ingredient containing composition such as a pesticide, for example, and an antifoaming agent having an inner core of a silicone antifoaming agent imbedded in a surrounding outer shell encapsulated to the inner core, of a meltable sugar or other biocompatible material.

It is yet another object of the present invention to provide methods of inhibiting foaming in active ingredient containing compositions, such as pesticides, and wherein there is added to the composition an effective amount of an encapsulated antifoaming agent formed by combining a silicone antifoaming agent together with a meltable sugar or other biocompatible material.

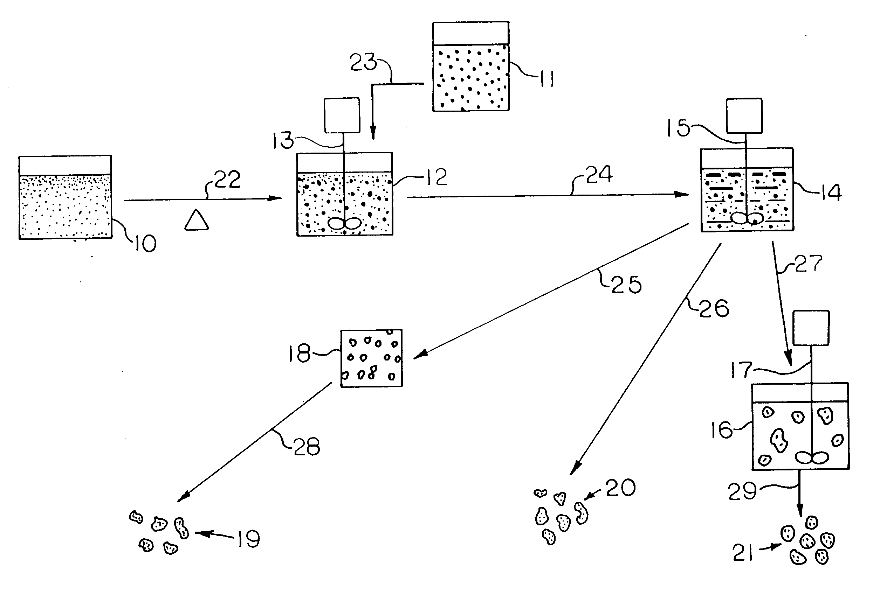

These and other features, objects and advantages of the present invention will become apparent from the following detailed description wherein reference is made to the single Figure in the accompanying drawings.

The single Figure of drawing is a functional representation of apparatus for processing and encapsulating the dry state antifoam compositions of the present invention.

In accordance with the present invention, liquid silicone antifoam compounds are protected from otherwise harsh environments and media and are rendered more suitable by encapsulating the liquid antifoam compound in a dry solid capsule, granule or in powder form. Encapsulation is carried out using anhydrous alpha-d-glucose as the encapsulating material. The glucose is first melted to form a liquid and the antifoam composition, typically a silica-filled polydimethylsiloxane antifoam, is dispersed in the glucose melt as the discontinuous phase. The glucose melt containing the antifoam is cooled and solidified thereby imbedding and entrapping the liquid silicone antifoam compound therewithin. The hard, dry, solid glucose with the entrapped liquid antifoam compound therein can be reduced to smaller diameter particulate sizes. The glucose melt containing the entrapped antifoam compound can be cooled and formed into microparticles by spray drying or quenching in a non-solvent such as a hydrocarbon, as illustrated with reference to the single Figure in the drawing, hereinafter to be explained in more detail.

The glucose-antifoam particles are formulated as dry solid capsules or powders and incorporated into food additives, drug and pharmaceutical formulations, medical compositions, cosmetics, as well as in detergents, insecticides, concrete and fermentation processes, thereby providing protection of the liquid antifoam compound from the harsh media and environments; until the solid particles are brought into contact with water. Upon being placed or brought into contact with water, the continuous phase of the meltable sugar encapsulate dissolves thereby releasing the liquid antifoam compound into the water.

With reference now to the single Figure in the drawing, there will be seen storage tank 10 of powdered glucose. This material is heated at 22 and sent to mixing tank 12 where agitator 13 combines the melted glucose with liquid antifoam compound 11 from line 23. The antifoam compound, along with the melted glucose, is then transferred via line 24 to tank 14 where agitator 15 disperses the two components. Once the glucose and the liquid antifoam compound have been thoroughly dispersed in tank 14, the product may be obtained by alternative procedures, indicated generally at 25, 26 and 27. For example, the material from melt tank 14 is treated in cooling chamber 18 via line 25, conveyed to and spray dried into cool air at 26 or the melt is added to a cold nonsolvent at 27 to solidify the glucose-antifoam mixture by transferring it to cooling tank 16 where agitator 17 stirs the material with cold nonsolvent. Solidified glucose with entrapped liquid antifoam compound therein from cooling chamber 18 is passed to a grinder indicated at 28, whereupon material in the form of dry glucose powder containing encapsulated liquid antifoam is obtained as indicated at 19. Material from cooling tank 16 is passed through a filter indicated by numeral 29 resulting in glucose particles 21 containing entrapped antifoam. The spray drying stage 26 of the process produces glucose powder 20 containing entrapped antifoam.

The following examples are set forth in order to further illustrate the invention and methods of preparation of the encapsulated antifoams.

### Example I

In a container, anhydrous alpha-d-glucose was hydrated by the addition of water in order to lower the melting point of the glucose. Silica-filled polydimethylsiloxane was added to the hydrated glucose in an amount of about twenty weight percent. The mixture was heated and agitated until the glucose was melted and until the antifoam agent was dispersed therein. The mixture was poured into an aluminum dish and allowed to solidify and crystallize. At the end of approximately twenty-four hours, the mixture had not completely hardened. It was observed that an oily layer of antifoam compound formed on the surface of the partially hardened mixture and that the oily layer contained about ten percent antifoam.

### Example II

In a container, anhydrous alpha-d-glucose was hydrated by the addition of water in order to lower the melting point of the glucose. Silica-filled polydimethylsiloxane based antifoam agent was added to the hydrated glucose in an amount of about ten weight percent. The mixture was heated and agitated until the glucose was melted and until the antifoam agent was dispersed therein. The mixture was poured into an aluminum dish and allowed to solidify and crystallize. At the end of approximately twenty-four hours, the mixture hardened.

### Example III

The glucose-antifoam mixture of Example I, rather than being crystallized as in Example I by pouring into an aluminum dish, was dropped by means of an eyedropper into a container of cold hexane and allowed to free fall to form pellets. The pellets did not harden immediately but became deformed upon contact with one another.

### Example IV

In this procedure, silica-filled polydimethylsiloxane was added to a container including anhydrous alpha-d-glucose in an amount of about five percent by weight. The resulting mixture was heated and thoroughly agitated until the glucose component of the mixture had melted and the antifoam material had been dispersed therein. The mix was poured into an aluminum dish as in Example I and allowed to crystallize. It was found that the undiluted anhydrous mixture crystallized practically immediately into a hard, solid block in contrast to the time required in the preceeding Examples I to III. The resulting crystallized, hard, solid block was ground into particulate form.

### Example V

In this example, silica-filled polydimethylsiloxane antifoam was added to a container containing anhydrous alpha-d-glucose in an amount of about ten percent by weight. The mixture was heated and thoroughly agitated until the glucose component of the mixture melted and the antifoam material had dispersed therein. The mix was poured into an aluminum dish as in Example I and allowed to crystallize. It was found that the mixture crystallized immediately into a hard, solid block, again in contrast to the diluted systems of Examples I to III, illustrating the importance of maintaining the system in an anhydrous condition. The resulting crystallized, hard, solid block was ground into particulate form.

### Example VI

In place of the aluminum dish in the former examples, the melt from Example IV was allowed to drop from an eyedropper into a container of cold hexane. The droplets of the melt formed into pellets that were hard and uniformly shaped. This procedure is depicted generally at 16 in the drawing.

### Example VII

In this example, encapsulated materials prepared in accordance with the previous examples were tested in order to demonstrate their defoaming capabilities and to determine the effectiveness of the antifoam materials in the powdered form. Small particle sizes of the encapsulated antifoam were selected for the test and the encapsulated antifoams of the present invention were compared to a standard antifoam emulsion of silica-filled polydimethylsiloxane antifoam that was not encapsulated. A sample of crystallized glucose without the antifoam encapsulated therein was also selected and the comparative results of the tests are set forth hereinbelow:

| SAMPLE | CONCENTRATION (ppm) | DEFOAMING TIME (s) |
|---|---|---|
| Standard antifoam emulsion | 50 | 42 |
| Five percent glucose-antifoam mixture | 50 | 37 |
| Glucose minus antifoam | 1000 | >240 |

In the above test in Example VII, the method employed provides a relative measure of defoaming performance. A measured amount of sample is added to a solution of TRITON® X-100 sold by Rohm and Haas, Philadelphia, Pennsylvania. The mixture is shaken and the time in seconds required for the foam to collapse and break are both recorded. The same mixture is shaken and reshaken four times with increasing length of shaking time. The collapse and break time for each shake time is recorded. The foam height after each shake period is also recorded. Collapse is determined when the foam height has fallen to 0.5 cm or below over the majority of the surface. Break is determined when the clear smooth surface of the solution shows through the collapsed foam. Foam height is the height of the foam immediately after the shaker stops.

It can be seen, that the glucose alone had very little or no defoaming capability, taking more than four minutes to break the foam. The unencapsulated polydimethylsiloxane based antifoam agent identified as the standard antifoam emulsion above, required forty-two seconds to break the foam. The encapsulate of the present invention broke the foam in thirty-seven seconds, therefore, it should be apparent that the glucose released the antifoam in solution and that the released antifoam performed at a rate comparable to the standard antifoam emulsion.

The production of encapsulated antifoams has been set forth above in the foregoing examples and, while the examples are limited to glucose and polydimethylsiloxane based materials, it is not intended that the present invention be so limited. For example, other meltable sugars can be employed in addition to or in place of glucose such as d-sorbitol, maltose, d-xylose, fructose, as well as typical biocompatible materials such as citric acid monohydrate and ascorbic acid. It should be noted that such materials possess the distinct advantage of being non-toxic which permits their use in foods, drugs, pharmaceuticals, medical and cosmetic applications. It is also not intended to limit the invention to the particular polydimethylsiloxane based antifoam materials, but that the methods and concepts set forth herein are equally applicable to other and equivalent materials such as, for example, siloxane materials other than antifoams, silicone lubricants, silicone emollients and other types of organofunctional siloxanes.

In a specific application of the present invention, when used with pesticides, the encapsulated antifoams of the present invention release the antifoam when the pesticide is dispersed in water, which dissolves the soluble glucose, sugar carrier or biocompatible material, thereby freeing the water insoluble antifoam. The encapsulated antifoams of the present invention have been found to be compatible with, for example, pesticides in the form of water dispersible granules, wettable powders, liquid concentrates and emulsifiable concentrates. Typical of such pesticides are, for example, DIAZINON®, an insecticide in emulsifiable concentrate form, SEVIN®, an insecticide in wettable powder form, BENOMYL®, a fungicide in wettable powder form and TREFLAN®, a herbicide in emulsifiable concentrate form.

The encapsulated antifoam compositions of the present invention have utility in applications such as liquid automatic dishwashing detergents, where the antifoam to encapsulate glucose ratio is about 10:90 by weight. The encapsulates of the present invention are ideal for protecting the antifoam material from such harsh detergent media and environments. In addition, the encapsulates of the present invention can be used as a solid antifoam agent for antacid tablets, for example.

It should be apparent from the foregoing that the materials of the present invention possess advantages over conventional liquid antifoam agents in that the materials of the present invention are in a solid water activatable state, and because of the solid state are easier to handle, formulate and incorporate into media requiring an antifoam function. Thus, they may be added to food, drug, medical and fermentation formulations in a dry free flowing state. The materials used as the outer surrounding core or encapsulate of the present invention are materials which are non-toxic and have been approved for food and drug applications for which the present invention is directed. The meltable sugars employed herein are simple sugar derivatives and having well defined melting points, easily convertible from the solid to liquid state by application of heat and without the necessity of solubilizing the materials in water.

## Claims

1. An antifoaming composition comprising an inner core of an organopolysiloxane antifoaming composition, and a surrounding outer shell encapsulating the inner core, wherein the outer shell comprises a material selected from a meltable sugar, d-sorbitol, citric acid monohydrate and ascorbic acid.

2. An antifoaming composition according to claim 1, wherein the meltable sugar is glucose, maltose, d-xylose or fructose.

3. An antifoaming composition according to claim 2, wherein the glucose is alpha-d-glucose.

4. An antifoaming composition according to any of claims 1 to 3, wherein the organopolysiloxane is a polydimethylsiloxane.

5. An antifoaming composition according to any of claims 1 to 4, wherein the organopolysiloxane is silica-filled.

6. An antifoam composition according to any of claims 1 to 5, containing 80 to 95 weight percent of the outer shell material and 5 to 20 weight percent of the inner core material.

7. A method of manufacturing an antifoaming composition according to any of claims 1 to 6, comprising heating and melting the outer shell material to form a hot melt, adding an organopolysiloxane antifoam compound to the hot melt, dispersing the antifoam compound in the hot melt while maintaining the system in a melted and anhydrous condition, cooling the dispersed melt in order to crystallize the melt, allowing the cooled crystallized melt to solidify whereby the antifoam compound is encapsulated by the solidified outer shell material and treating the solidified composition by reducing it to a small diameter.

8. A method of inhibiting foaming in an active ingredient-containing composition, comprising adding to the active composition an effective amount of an antifoaming composition according to any of claims 1 to 6.

## Patentansprüche

1. Antischaummittel, enthaltend einen inneren Kern aus einem Antischaummittel auf Basis eines Organopolysiloxans und eine den Kern umgebende äußere Umhüllung, die den inneren Kern einkapselt, wobei die äußere Hülle ein Material enthält, das ausgewählt ist aus schmelzbaren Zuckern, d-Sorbit, Zitronensäure-monohydrat und Ascorbinsäure.

2. Antischaummittel nach Anspruch 1, wobei der schmelzbare Zucker Glucose, Maltose, d-Xylose oder Fructose ist.

3. Antischaummittel nach Anspruch 2, wobei die Glucose alpha-d-Glucose ist.

4. Antischaummittel nach einem der Ansprüche 1 bis 3, wobei das Polydiorganosiloxan ein Polydimethylsiloxan ist.

5. Antischaummittel nach einem der Ansprüche 1 bis 4, wobei das Organopolysiloxan mit Siliziumdioxid versetzt ist.

6. Antischaummittel nach einem der Ansprüche 1 bis 5, enthaltend 80 bis 95 Gewichtsprozent Material der äußeren Umhüllung und 2 bis 20 Gewichtsprozent Material des inneren Kerns.

7. Verfahren zur Herstellung eines Antischaummittels nach einem der Ansprüche 1 bis 6, bei dem man das Material der äußeren Umhüllung zu einer heißen Schmelze aufschmilzt, der heißen Schmelze das Antischaummittel auf Basis eines Organopolysiloxans zusetzt, das Antischaummittel in der heißen Schmelze dispergiert und dabei das System unter wasserfreien Bedingungen im Schmelzzustand hält, die dispergierte Schmelze abkühlt, um sie zu kristallisieren, die abgekühlte, kristallisierte Schmelze erstarren läßt, wodurch das Antischaummitel durch das verfestigte Material der äußeren Umhüllung eingekapselt wird, und das Feststoffgemisch behandelt, indem man es auf kleine Durchmesser zerkleinert.

8. Verfahren zur Verhinderung des Schäumens in einem Wirkstoffgemisch, wobei man dem Wirkstoffgemisch eine wirksame Menge eines Antischaummittels nach einem der Ansprüche 1 bis 6 zusetzt.

## Revendications

1. Une composition antimousse comprenant un coeur intérieur d'une composition antimousse à base d'organopolysiloxane et une enveloppe extérieure enrobant le coeur intérieur, dans laquelle l'enveloppe extérieure comprend une matière choisie parmi un sucre fusible , le d-sorbitol, l'acide citrique monohydraté et l'acide ascorbique.

2. Une composition antimousse selon la revendication 1, dans laquelle le sucre fusible est du glucose, du maltose, du d-xylose ou du fructose.

3. Une composition antimousse selon la revendication 2, dans laquelle le glucose est l'alpha-d-glucose.

4. Une composition antimousse selon l'une quelconque des revendications 1 à 3, dans laquelle l'organopolysiloxane est un polydiméthylsiloxane.

5. Une composition antimousse selon l'une quelconque des revendications 1 à 4, dans laquelle l'organopolysiloxane est chargé par de la silice.

6. Une composition antimousse selon l'une quelconque des revendications 1 à 5, contenant 80 à 95 pour cent en poids de la matière d'enveloppe extérieure et 5 à 20 pour cent en poids de la matière de coeur intérieur.

7. Un procédé de préparation d'une composition antimousse selon l'une quelconque des revendications 1 à 6, comprenant les opérations consistant à chauffer et faire fondre la matière d'enveloppe extérieure pour former une masse fondue chaude, à ajouter un composé antimousse organopolysiloxane à la masse fondue chaude, à disperser le composé antimousse dans la masse fondue chaude tout en maintenant le système dans un état fondu et anhydre, à refroidir la masse fondue dispersée en vue de faire cristalliser la masse fondue, à laisser la masse fondue cristallisée et refroidie se solidifier de sorte que le composé antimousse se trouve enrobé par la matière d'enveloppe extérieure solidifiée, et à traiter la composition solidifiée en la réduisant à un petit diamètre.

8. Un procédé pour empêcher la formation de mousse dans une composition renfermant un ou des ingrédients actifs, comprenant l'addition à la composition active d'une quantité efficace d'une composition antimousse selon l'une quelconque des revendications 1 à 6.
